# EUROPÄISCHE PATENTSCHRIFT

(11) **EP 4 014 470 B1**
(45) Veröffentlichungstag und Bekanntmachung des Hinweises auf die Patenterteilung: **25.06.2025**
(21) Anmeldenummer: 19755571.7
(22) Anmeldetag: 13.08.2019
(51) Int. Cl.: H04L 67/00, H04L 67/12, H04B 5/24, H04W 4/38

(54) **SENSOREINRICHTUNG ZUR ÜBERTRAGUNG EINER SENSORPARAMETRIERUNG**
SENSOR DEVICE FOR TRANSMITTING A SENSOR PARAMETER SETTING
DISPOSITIF CAPTEUR POUR LA TRANSMISSION D'UN RÉGLAGE DE PARAMÈTRE DE CAPTEUR

(43) Veröffentlichungstag der Anmeldung: 22.06.2022
(73) Patentinhaber: VEGA Grieshaber KG, 77709 Wolfach (DE)
(72) Erfinder: ISENMANN, Andreas, 77716 Haslach im Kinzigtal (DE); BURGERT, Florian, 77723 Gengenbach (DE); ALLGAIER, Volker, 77716 Haslach im Kinzigtal (DE)
(74) Vertreter: Maiwald GmbH
(86) Internationale Anmeldenummer: PCT/EP2019/071668
(87) Internationale Veröffentlichungsnummer: WO 2021/028023

(56) Entgegenhaltungen:
- DE-A1- 102016 224 158
- DE-U1- 202016 103 635
- US-A1- 2010 268 496
- US-B2- 7 610 354

## Beschreibung

### Gebiet der Erfindung

Die Erfindung betrifft eine Sensoreinrichtung zur Übertragung einer Sensorparametrierung zwischen Sensoren, einen Sensor für eine Sensoreinrichtung, die Verwendung eines Sensors, ein Verfahren zur Übertragung einer Sensorparametrierung zwischen Sensoren, ein Programmelement und ein computerlesbares Medium.

### Hintergrund der Erfindung

Wird ein batteriegespeister Sensor, z.B. nachdem die Batterie entladen ist, mit einem neuen Sensor ausgetauscht, muss dieser gleich eingestellt und konfiguriert werden, wie der bisherige Sensor. Die Parametrierdaten des bisherigen Sensors können zum Beispiel in einer oder mehreren Dateien auf einem Rechner gespeichert sein und der neue Sensor kann vor der Auslieferung bzw. vor der Installation mit dem Rechner verbunden werden und konfiguriert werden. Hierzu muss der neue Sensor angeschlossen werden, die entsprechenden Parametrierdaten z.B. aus einer oder mehreren Datenbanken und Dateien zusammengestellt werden und der Übertragungsvorgang gestartet werden. Nach einer Qualitätssicherungsprüfung, die insbesondere sicherstellt, dass die richtigen Daten übertragen worden sind, kann der Sensor vom Rechner getrennt werden und am Einsatzort installiert werden.

US7610354 B2 offenbart ein System, in dem ein IFD (Intelligent Field Device), welches auch Sensoren beinhalten kann, ein Backup seiner Gerätekonfiguration auf einem anderen IFD speichern kann. Falls das erste IFD dann z.B. aufgrund eines Stromausfalls seine Konfiguration verliert, kann es diese von dem zweiten IFD anfordern.

### Zusammenfassung der Erfindung

Mit Ausführungsformen der Erfindung kann in vorteilhafter Weise eine verbesserte Sensoreinrichtung bereitgestellt werden. Beispielsweise kann die Sensoreinrichtung die Parametrierung eines bisherigen Sensors unter Reduzierung oder Vermeidung der voranstehend genannten Schritte automatisch vom neuen Sensor übernehmen.

Dies wird durch die Gegenstände der unabhängigen Patentansprüche ermöglicht.

Vorteilhafte Ausführungsformen sind Gegenstand der abhängigen Ansprüche, der folgenden Beschreibung, sowie der Figuren.

Es wird eine Sensoreinrichtung zur Übertragung einer Sensorparametrierung, einer Parametrisierung und/oder einer Parametrierung zwischen Sensoren bereitgestellt. Die Sensoreinrichtung weist einen ersten Sensor mit einer Sensorparametrierung auf, sowie einen zweiten Sensor. Der erste Sensor und der zweite Sensor sind eingerichtet, miteinander über eine Kommunikationsverbindung zu kommunizieren. Der erste Sensor ist eingerichtet, über die Kommunikationsverbindung die Sensorparametrierung an den zweiten Sensor zu senden. Der zweite Sensor ist eingerichtet, die Sensorparametrierung zu empfangen und zu übernehmen. Der zweite Sensor ist ferner eingerichtet, dem ersten Sensor die zur Übertragung der Sensorparametrierung über die Kommunikationsverbindung notwendige Energie über die Kommunikationsverbindung zur Verfügung zu stellen.

Unter Sensor wird hierbei eine Anordnung bzw. Gerät mit einer Einheit zur physikalischen Erfassung der Prozessgröße verstanden, z.B. einen physikalischen Sensor oder eine Generator-Empfänger-Anordnung für z.B. Ultraschallwellen oder Radar, sowie eine Elektronikeinheit, die zumindest die elektrische Energieversorgung bereitstellt, und die je nach Anwendungsfall zum Beispiel die erfasste Prozessgröße elektronisch aufbereitet und als digitale Daten zur Verfügung stellt. Die elektronischen Elemente, die hierzu verwendet werden können, wie z.B. Spannungsregler, Spannungswandler, Schutzschaltungen, Analog-Digitalwandler, Filter, Verstärker, Mikroprozessoren, Speicherbausteine, Signalgeneratoren, Schwingungserzeuger, Strahler, Piezowandler, etc. sind dem Fachmann bekannt. Der Begriff "Gerät" wird in dieser Offenbarung synonym für "Sensor" verwendet, wenn aus dem Kontext klar hervorgeht, dass es sich um einen Sensor handelt.

Die beiden Sensoren sind beispielsweise batteriegespeist und vom gleichen oder ähnlichen Typ. Der bisherige, d.h., der erste Sensor hat keine Batterieladung mehr und soll durch einen neuen, d.h., den zweiten Sensor gleicher oder ähnlicher Bauweise ersetzt bzw. ausgetauscht werden. Die Sensoreinrichtung ermöglicht nun eine einfache Inbetriebnahme des neuen Sensors, indem die Geräteeinstellung des bisherigen Sensors mit leerer Batterie auf den neuen Sensor mit voller Batterie übertragen werden. Der neue Sensor mit voller Batterie speist dabei das Kommunikationsmodul des bisherigen Sensors und erhält die Parametrierung bzw. Parametrierdaten über die Kommunikationsverbindung.

Der Begriff "Kommunikationsverbindung" soll in dieser Offenbarung also so verstanden werden, dass nicht nur Daten übertragen werden, sondern auch die dazu notwendige Energie. Folglich ist hierunter auch eine Verbindung zu verstehen, bei der eine Datenübertragung nach z.B. einem Kommunikationsstandard erfolgt und eine Energieübertragung für die Datenübertragung, die nicht Teil des Kommunikationsstandards ist.

Eine geeignete Kommunikationsverbindung ist gemäß einer Ausführungsform eine Nahfeldkommunikationsverbindung (Near Field Communication, NFC), bei der die Energie des neuen Sensors induktiv und somit kabellos auf den alten Sensor übertragen wird.

Gemäß einer Ausführungsform ist die Kommunikationsverbindung drahtgebunden. Beispielsweise ist die Kommunikationsverbindung eine USB-Verbindung, die sowohl Energie als auch Datenübertragung bereitstellen kann. Hierfür weisen die Sensoren eine entsprechende Hard- und Software auf, sowie z.B. eine den Umwelt- bzw. Umgebungsbedingungen standhaltende Steckerverbindung am Gehäuse, so dass die Verbindung zuverlässig ist und der Sensor keinen Schaden durch z.B. eindringende Feuchtigkeit oder Flüssigkeit nimmt.

Gemäß obiger Definition des Begriffs "Kommunikationsverbindung" kann es bezüglich Energie und Datenübertragung auch eine Mischform von drahtlos und drahtgebunden geben. Beispielsweise erfolgt die Energieübertragung drahtlos über eine Induktionstechnologie und die Datenübertagung über einen drahtgebundenen Kommunikationsstandard oder umgekehrt. Die Energieübertragung muss nicht zwingend in einem Zusammenhang mit einem Standard zur Datenübertragung stehen.

Die Kommunikationsverbindung kann gemäß einer Ausführungsform eine Master-Slave Verbindung sein. Die Sensoren sind eingerichtet, sowohl als Master als auch als Slave agieren können. Damit ist sichergestellt, dass ein Sensor mit voller Batterie z.B. als Master die Daten per NFC aus Sensoren mit leerer Batterie auslesen kann, aber er als Slave für einen weiteren Generationenwechsel geeignet ist.

Um die Batterie des neuen Sensors nicht unnötig zu belasten, kann das Abfragen der NFC-Schnittstelle beim neuen Sensor über eine externe Quelle getriggert werden. Daher ist in einigen Ausführungsformen der zweite Sensor eingerichtet, ein Signal zu empfangen, um die Übertragung zu starten. Unter Signal kann hierbei beispielsweise ein elektronisches Signal verstanden werden, wie z.B. ein "enable"-Signal eines digitalen Schaltkreises, eine Spannungsversorgung, die für einen Schaltkreis eingeschaltet wird, oder eine Nachricht bzw. Befehl, der von einer Logikschaltung, z.B. einem Prozessor verarbeitet wird. Das Signal kann gemäß einer Ausführungsform beispielsweise durch eine Taste an dem Sensor, einen Reed-Kontakt oder einen Hall-Sensor erzeugt werden und von einem Benutzer am Sensor ausgelöst werden. Weist der Sensor ein Bluetoothmodul oder ein Mobilfunkmodul auf, kann das Signal über die entsprechende Schnittstelle empfangen werden. Somit kann ein Nutzer über eine Bluetooth-Verbindung mit einem Smartphone oder einem Tablet ohne erforderliche Authentifizierung oder z.B. durch Betätigen eines Magnetschalters von außen die Übertragung starten. Die Daten des alten Gerätes werden dann komplett auf den neuen Sensor, via NFC, übertragen. Das neue Gerät verhält sich dann exakt wie das bisherige Gerät und ist instantan betriebsbereit. Ein weiterer Eingriff durch den Betreiber und/oder Benutzer ist nicht nötig. Anstatt einer Bluetooth-Verbindung kann auch eine drahtgebundene oder andere drahtlose Verbindung Anwendung finden.

Parallel dazu können gemäß einer Ausführungsform die Parametrierinformationen des bisherigen Sensors auch aus einem Backup entnommen werden, wenn die Sensoren die Verbindung aufgebaut haben. Durch den Aufbau der Verbindung kann z.B. die Berechtigung der Datenübertragung sichergestellt werden und daraufhin der Zugriff auf das Backup erfolgen. Das Backup kann hierbei in dem ersten Sensor gespeichert sein und/oder durch eine direkte Datenverbindung und/oder durch entsprechende Parametriertools auf einem Server und/oder in einer Datenbank in der Cloud gespeichert werden. Der Sensor kann seine Parametrierinformationen z.B. in regelmäßigen Abständen, oder wenn Änderungen der Geräteeinstellungen vorgenommen werden, als Sicherheitskopien erstellen, die beispielsweise in einem EEPROM oder einem anderen nichtflüchtigen Speicher abgespeichert werden, so dass die Informationen auch bei leerer Batterie erhalten bleiben. Der Kommunikationsprozessor für die Verbindung oder eine andere Logikschaltung kann während der Stromversorgung durch den zweiten Sensor auf den Speicher zugreifen und die Daten über die bestehende Kommunikationsverbindung übertragen. Wenn das Backup durch eine direkte Datenverbindung und/oder durch ein Parametriertool in der Cloud gespeichert ist, kann der zweite Sensor z.B. nach Überprüfung der Berechtigung über eine weitere Kommunikationsschnittstelle darauf zugreifen. Dies kann durch eine direkte Datenverbindung, wie z.B. ein Mobilfunkkommunikationsmodul im Sensor und/oder über ein mit der Cloud verbundenes Kommunikationsgerät, mit dem der Sensor z.B. über NFC, über Bluetooth oder über Kabel verbunden ist, erfolgen.

Gemäß einer Ausführungsform weist die Sensorparametrierung Informationen zur Messphysik, Cloud-Zugangsdaten, Daten zur Zuordnung des ersten Sensors zu einer Messstelle und/oder Koppelinformationen für Bedieneinrichtungen, wie z.B. Bluetooth-Einrichtungen, Smartphones oder Tablets auf. Für den Anwender ist so eine sehr einfache Inbetriebnahme des neuen Sensors möglich. Das Cloud System muss nicht erneut parametriert werden. Das neue Gerät ersetzt das bisherige und wird sämtlichen Messstellen des bisherigen Gerätes zugeordnet.

Gemäß einer Ausführungsform weist der erste Sensor eine erste Seriennummer auf und der zweite Sensor eine zweite Seriennummer. Der erste Sensor ist eingerichtet, die Daten nur dann über die Kommunikationsverbindung zu senden, wenn die erste Seriennummer und die zweite Seriennummer eine Beziehung zueinander haben. Um beim Kopieren der Daten Sicherheit zu erhalten, wird beispielsweise zunächst die Seriennummer des ersten Sensors vom zweiten Sensor ausgelesen, welcher die beiden Nummern zur Überprüfung über beispielsweise eine Mobilfunkschnittstelle an einen Server sendet, der auf die Kundendatenbank zugreift. Nur wenn beide Seriennummern demselben Kunden zugeordnet sind, wird das Übertragen der Daten erlaubt, und der zweite Sensor veranlasst den ersten Sensor, die Parametrierdaten zu übertragen. Alternativ kann auch festgelegt sein, dass die Seriennummern zu einem bestimmten Teil übereinstimmen oder nach einem bestimmten Schema übereinstimmen. Beispielsweise ist einem Kunden ein gewisser Umfang an Seriennummern zugeteilt. Die Seriennummer kann zum Beispiel in einem ROM, z.B. einem EEPROM gespeichert sein.

Im Zuge der Seriennummernüberprüfung unter Verwendung beispielsweise einer Mobilfunkverbindung kann weiterhin auch die Berechtigung überprüft werden, ob der zweite Sensor autorisiert ist, die Daten von dem ersten Sensor abzufragen. Weiterhin können hierbei bei Bedarf auch Parametrierdaten ergänzt oder aktualisiert werden.

Generell ist zu bemerken, dass vorzugsweise beide Sensoren gleich oder ähnlich ausgeführt sind, so dass der hier beschriebene zweite, d.h. neue Sensor, sobald dessen Batterie leer ist, in die Rolle eines ersten, d.h. bisherigen Sensors schlüpfen kann und seine Geräteeinstellungen an einen weiteren neuen Sensor übertragen kann. So kann der Wechsel über mehrere Generationen hinweg stattfinden.

Beispielsweise kann vorgesehen sein, die Übertragung der Geräteeinstellung(en) und/oder der Sensorparametrierung bei Erreichen eines Schwellenwerts einer Energieversorgung, etwa einer Restenergie einer Batterie des ersten Sensors, ausgeführt werden. In diesem Fall kann der erste Sensor nach Abschluss der Übertragung durch den neuen (zweiten) Sensor deaktiviert werden, so dass dieser nach der Übertragung keine weiteren Messwerte mehr überträgt. Dies kann insbesondere im Hinblick auf einen unterbrechungsfreien Betrieb der Messstelle von Vorteil sein und/oder einen unterbrechungsfreien Betrieb ermöglichen.

Gemäß einer weiteren Ausführungsform sind der erste Sensor und der zweite Sensor Füllstandsensoren zum Messen eines Füllstandes einer Flüssigkeit, eines Schüttguts oder sonstigen Material, zum Beispiel mit Radar oder Ultraschall.

Gemäß einem Aspekt wird der Sensor bzw. werden die Sensoren alternativ oder zusätzlich zur Füllstandmessung zur Durchflussmessung, Grenzstandmessung, Druckmessung, Dichtemessung oder zur Objekterfassung verwendet. Die Verwendungsmöglichkeiten sind jedoch nicht auf die genannten beschränkt. Zum Beispiel kann es sich bei den Sensoren auch um Gassensoren oder Rauchmelder handeln. Ein besonders vorteilhafter Einsatz der Sensoreinrichtung ergibt sich in mobilen Anwendungen oder variablen Umgebungen, bei denen sich zum Beispiel der Aufstellort, Kundendaten, Daten des zu messenden Mediums etc. ändern.

Objekterfassung kann zum Beispiel die Überwachung eines Gefahrenbereiches einer Maschine durch ein Infrarot- oder Radarsensor sein, bei der es z.B. zu einer Abschaltung der Maschine kommt, wenn sich eine Person der Maschine zu weit nähert. Bei Fließbandanwendungen erfasst der Sensor beispielsweise Objekte auf dem Fließband, z.B. zur Kontrolle, zur Zählung oder zur Sortierung.

Gemäß einem weiteren Aspekt wird ein Verfahren zur Übertragung einer Sensorparametrierung zwischen Sensoren über eine Kommunikationsverbindung bereitgestellt, aufweisend die Schritte:
Bereitstellen von Energie, die für Kommunikationsverbindung notwendig ist, über die Kommunikationsverbindung durch den zweiten Sensor an einen ersten Sensor, Senden der Sensorparametrierung durch den ersten Sensor an den zweiten Sensor, Empfangen und Übernehmen der Sensorparametrierung durch den zweiten Sensor.

Die Sensorparametrierung weist hierbei Informationen zur Messphysik, Cloud-Zugangsdaten, Daten zur Zuordnung des ersten Sensors zu einer Messstelle und/oder Koppelinformationen für Bedieneinrichtungen auf.

Die Kommunikationsverbindung kann hierbei insbesondere eine drahtlose, z.B. eine NFC-Verbindung sein oder eine drahtgebundene Verbindung. Dem Schritt des Sendens der Sensorparametrierung kann ein externes Triggern der Übertragung vorausgehen, z.B. durch Empfangen eines externen Signals das durch einen Schalter, eine Taste, einen Reed-Kontakt, einen Hall-Sensor am Sensor oder durch ein Bluetooth-Gerät oder ein Mobilfunkgerät erzeugt wird.

Weiterhin kann dem Schritt des Sendens der Sensorparametrierung ein Überprüfen der Seriennummer vorangehen, so dass nur dann die Übertragung gestartet wird, wenn die Seriennummer eine Bedingung erfüllt, wie z.B. die Zugehörigkeit zum gleichen Kunden.

Weiterhin kann dem Schritt des Sendens ein Überprüfen der Berechtigung, d.h. eine Autorisierung und/oder eine Authentifizierung vorangehen.

Gemäß einer Ausführungsform kann nach der Übernahme der Sensorparametrierung eine Messwertübertragung im ersten Sensor deaktiviert werden.

Weitere Optionen und Verfahrensschritte entsprechen und ergeben sich aus den oben beschriebenen Ausführungsformen.

Merkmale, Elemente und/oder Funktionen der Sensoreinrichtung, so wie voranstehend und nachfolgend beschrieben, können Merkmale, Elemente und/oder Schritte des Verfahrens, so wie voranstehend und nachfolgend beschrieben, sein und umgekehrt.

Gemäß einem weiteren Aspekt wird ein Programmelement bereitgestellt, das, wenn es auf einer Steuereinheit, wie z.B. einem Prozessor eines Sensors ausgeführt wird, den Sensor anleitet, die Schritte des Verfahrens, so wie voranstehend und nachfolgend beschrieben, durchzuführen.

Das Programmelement kann Teil eines Computerprogramms sein, es kann jedoch auch ein ganzes Programm für sich sein.

Gemäß einem weiteren Aspekt wird ein computerlesbares Medium bereitgestellt, auf welchem ein oben beschriebenes Programmelement gespeichert ist. Das computerlesbare Medium kann als ein Speichermedium angesehen werden, wie beispielsweise ein USB-Stick, eine CD, eine DVD, ein Datenspeichergerät, eine Festplatte oder ein beliebiges anderes Medium, auf dem sich ein Programmelement wie oben beschrieben befinden kann gelagert.

Andere Variationen der offenbarten Ausführungsformen können vom Fachmann bei der Durchführung der beanspruchten Erfindung durch das Studium der Zeichnungen, der Offenbarung und der beigefügten Ansprüche verstanden und ausgeführt werden. In den Ansprüchen schließt das Wort "umfassend" andere Elemente oder Schritte nicht aus, und der unbestimmte Artikel "ein" oder "eine" schließt eine Vielzahl nicht aus. Ein einzelner Prozessor oder eine andere Einheit kann die Funktionen mehrerer Gegenstände oder Schritte erfüllen, die in den Ansprüchen aufgeführt sind. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann. Ein Computerprogramm kann auf einem geeigneten Medium wie einem optischen Speichermedium oder einem Halbleitermedium, das zusammen mit oder als Teil einer anderen Hardware geliefert wird, gespeichert / verteilt werden, kann aber auch in anderen Formen, beispielsweise über das Internet oder andere, verteilt sein drahtgebundene oder drahtlose Telekommunikationssysteme. Bezugszeichen in den Ansprüchen sollten nicht so ausgelegt werden, dass sie den Umfang der Ansprüche begrenzen.

Im Folgenden werden Ausführungsbeispiele der Erfindung unter Bezugnahme auf die Figuren beschrieben.

### Kurze Beschreibung der Figuren

Im Folgenden werden Ausführungsbeispiele der Erfindung mit Bezug auf die beiliegenden Figuren detailliert beschrieben. Weder die Beschreibung noch die Figuren sollen als die Erfindung einschränkend ausgelegt werden. Hierbei zeigt
Fig. 1 eine Sensoreinrichtung gemäß einem Ausführungsbeispiel, und
Fig. 2 ein Verfahren gemäß einem Ausführungsbeispiel.

Die Zeichnungen sind lediglich schematisch und nicht maßstabsgetreu. Grundsätzlich sind identische oder ähnliche Teile mit den gleichen Bezugszeichen versehen.

### Detaillierte Beschreibung der Figuren

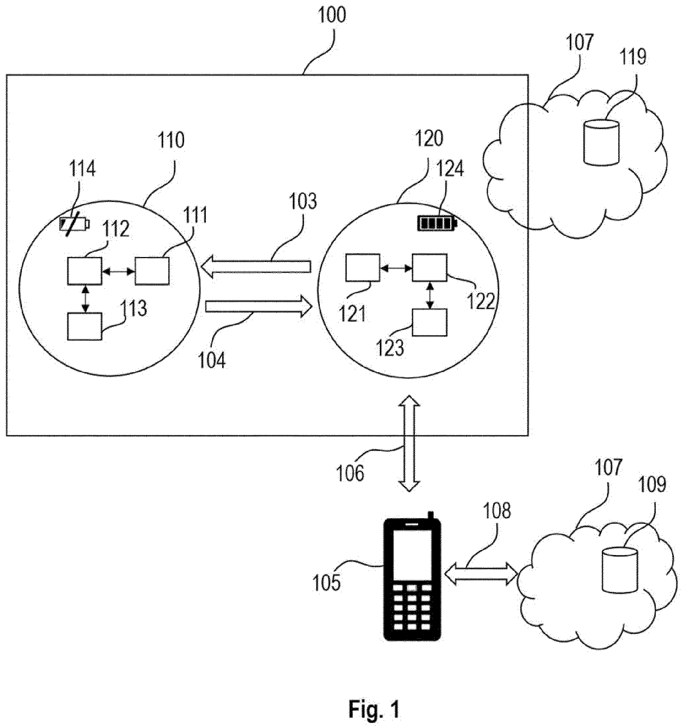

Fig. 1 zeigt in einem ersten Ausführungsbeispiel eine Sensoreinrichtung mit einem ersten, bisherigen Sensor 110, dessen Batterie 114 leer ist, einen gewissen Schwellenwert eines Ladungszustands der Batterie und/oder eine geringe Restenergiemenge hat und daher ersetzt werden soll, und einem zweiten, neuen Sensor 120, dessen Batterie 124 voll ist und der den ersten Sensor 110 ersetzen soll. Die beiden Sensoren 110, 120 sind in örtlicher Nähe zueinander, so dass der erste Sensor 110 Energie von dem zweiten Sensor 120 in diesem Beispiel über den induktiven Teil 103 der Nahfeldkommunikationsverbindung 103, 104 beziehen kann. Im Sensor 110 wird durch die empfange Energie das Kommunikationsmodul 111 aktiviert, so dass der Prozessor 112 Parametrierdaten, wie z.B. Informationen zur Messphysik, Cloud-Zugangsdaten, Daten zur Zuordnung des ersten Sensors zu einer Messstelle und/oder Koppelinformationen für Bedieneinrichtungen aus dem Speicher 113 auslesen kann. Das Kommunikationsmodul 111 sendet die ausgelesenen Daten über den Datenverbindungsteil 104 der Nahfeldkommunikationsverbindung 103, 104 an das Kommunikationsmodul 121 des zweiten Sensors 120. Prozessor 112 speichert die Daten im Speicher 123 und konfiguriert den zweiten Sensor 120 entsprechend, so dass dieser sofort betriebsbereit ist.

Im Beispiel nach Fig. 1 ist der Sensor 120 über das Smartphone 105, das über einen Mobilfunkstandard kommunizieren kann, in eine Cloud 107 eingebunden, wodurch ein Zugriff auf eine Kundendatenbank 109 und/oder eine Datenbank 119 für Messdaten und Sensordaten. Sowohl das Smartphone 105 als auch Sensor 120 sind zudem bluetoothfähig. Ein Bediener des Smartphones kann über eine Applikation die Datenübertragung der Parametrierdaten über die Bluetooth-Verbindung 106 anstoßen. Über die Mobilfunkverbindung 108 kann überprüft werden, ob der erste Sensor 110 und der zweite Sensor 120 dem gleichen Kunden zugeordnet sind und ob der zweite Sensor 120 berechtigt ist, die Daten von dem ersten Sensor 110 zu übernehmen. Hierdurch kann sichergestellt werden, dass die Daten vom zu ersetzenden Sensor 110 und nicht etwa einem dritten Sensor abgefragt werden, und es wird zum anderen eine unberechtigte Datenabfrage durch Sensor 120 verhindert.

Zumindest Teile der Daten können auch durch die Kundendatenbank 109 oder die Datenbank 119 ergänzt, geändert und überprüft werden. Sobald die Berechtigung des Sensors 120 als positiv bestimmt wurde, kann der Sensor nun beispielsweise die Zugangsdaten zur Cloud bekommen, wodurch er direkt auf die Datenbank 119 zugreifen kann, aus der er sich weitere Parametrierdaten holen kann. Beispielsweise sind dies Parametrierdaten, die in einer Backup-Datei in der Datenbank oder einem Server gespeichert sind. Alternativ kann der Zugriff auf die Datenbank 119 bzw. die Backup-Datei auch über das Mobilfunkgerät nach erfolgreicher Prüfung der Berechtigung erfolgen.

Aus obiger Beschreibung ist ersichtlich, dass weitere Variationen im Ablauf und in der Konstellation möglich sind.

Ein Anwendungsfall sind Füllstandsensoren auf mobilen Tanks. Diese überwachen in regelmäßigen definierten oder variablen Zeitabständen den Füllstand und senden diesen an eine Cloud 107. Diese Cloud 107 interpretiert die Füllstandinformation des Sensors 110 und ordnet sie dem jeweiligen Silo zu. Nach Ende der Batterielaufzeit soll ein neuer Sensor 120 auf dem Silo montiert werden und die Parametrierung des bisherigen Sensors 110 übernehmen.

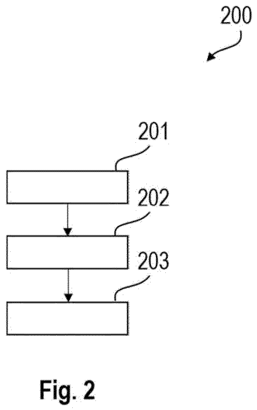

Fig. 2 zeigt ein Verfahren 200 zur Übertragung einer Sensorparametrierung zwischen Sensoren über eine Kommunikationsverbindung 103, 104 gemäß einer Ausführungsform. Zunächst wird in Schritt 201 Energie bereitgestellt, die für Kommunikationsverbindung 103, 104 notwendig ist. Dies erfolgt über die Kommunikationsverbindung 103, 104, z.B. NFC, mit induktiver Energieübertragung 103, durch den zweiten Sensor 120 an einen ersten Sensor 110. Daraufhin sendet in Schritt 202 der erste Sensor 110 die Sensorparametrierung an den zweiten Sensor 120. Schließlich empfängt und übernimmt in Schritt 203 der zweite Sensor 120 die Sensorparametrierung.

Optional kann in Schritt 203 (oder in einem weiteren optionalen Schritt), der zweite Sensor 120 die Messwertübertragung in dem ersten Sensor 110 deaktivieren, etwa durch Übermitteln eines entsprechenden Steuersignals und/oder Signals an den zweiten Sensor 120. Dadurch kann eine Kollision der Messwertübertragung vom ersten und zweiten Sensor 110, 120 bei eventuell vorhandener Restenergie in der Batterie des ersten Sensors 110 vermieden werden.

Somit wird eine kostengünstige, einfache und unaufwändige Lösung bereitgestellt, um einen bisherigen Sensor mit einem neuen Sensor zu ersetzen, indem er in die Nähe des bisherigen Sensors gesetzt wird. Die Parametrierdaten werden hierbei automatisch übertragen. Optional kann ein externes Triggern die Übertragung veranlassen. Die hierzu notwendige Energie wird von dem neuen Sensor bereitgestellt.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen

## Patentansprüche

1. Sensor (120) für eine Sensoreinrichtung (100) mit einem ersten (110) und einem zweiten (120) Sensor, in welcher der Sensor der zweite Sensor (120) ist; wobei
der zweite Sensor (120) eingerichtet ist, die Sensorparametrierung des ersten Sensors (110) zu empfangen, mit dem der erste Sensor (110) konfiguriert ist, und diese Sensorparametrierung zu übernehmen um den ersten Sensor (110) zu ersetzen; und wobei
der zweite Sensor (120) ferner eingerichtet ist, dem ersten Sensor (110) die zur Übertragung der Sensorparametrierung über die Kommunikationsverbindung (103, 104) notwendige Energie über die Kommunikationsverbindung (103, 104) zur Verfügung zu stellen.

2. Sensoreinrichtung (100) zur Übertragung einer Sensorparametrierung zwischen Sensoren, aufweisend:
einen ersten Sensor (110), der eine Sensorparametrierung aufweist, die eine Parametrierung des ersten Sensors ist; und
einen zweiten Sensor (120) nach Anspruch 1;
wobei
der erste Sensor (110) und der zweite Sensor (120) eingerichtet sind, miteinander über eine Kommunikationsverbindung (103, 104) zu kommunizieren;
der erste Sensor (110) eingerichtet ist, über die Kommunikationsverbindung (103, 104) seine Sensorparametrierung an den zweiten Sensor (120) zu senden;
der zweite Sensor (120) eingerichtet ist, die Sensorparametrierung des ersten Sensors zu empfangen und zu übernehmen, um den ersten Sensor zu ersetzen; und wobei
der zweite Sensor (120) ferner eingerichtet ist, dem ersten Sensor (110) die zur Übertragung der Sensorparametrierung über die Kommunikationsverbindung (103, 104) notwendige Energie über die Kommunikationsverbindung (103, 104) zur Verfügung zu stellen.

3. Sensoreinrichtung (100) nach Anspruch 2, wobei die Kommunikationsverbindung (103, 104) eine Nahfeldkommunikationsverbindung (Near Field Communication, NFC) ist oder eine drahtgebundene Verbindung ist.

4. Sensoreinrichtung (100) nach einem der Ansprüche 2 bis 3, wobei der erste Sensor und der zweite Sensor eingerichtet sind, sowohl als Master als auch als Slave agieren zu können.

5. Sensoreinrichtung (100) nach einem der Ansprüche 2 bis 4, wobei der zweite Sensor eingerichtet ist, ein Signal zu empfangen, um die Übertragung zu starten.

6. Sensoreinrichtung (100) nach Anspruch 5, wobei das Signal um die Übertragung zu starten durch eine Taste, einen Reed-Kontakt, einen Hall-Sensor, ein Bluetooth-Gerät und/oder ein Mobilfunkgerät erzeugt wird.

7. Sensoreinrichtung (100) nach einem der Ansprüche 2 bis 6, wobei die Sensorparametrierung Informationen zur Messphysik, Cloud-Zugangsdaten, Daten zur Zuordnung des ersten Sensors zu einer Messstelle und/oder Koppelinformationen für Bedieneinrichtungen aufweist.

8. Sensoreinrichtung (100) nach einem der Ansprüche 2 bis 7, wobei der erste Sensor eine erste Seriennummer aufweist und der zweite Sensor eine zweite Seriennummer aufweist; und wobei der erste Sensor eingerichtet ist, die Daten über die Kommunikationsverbindung nur dann zu senden, wenn die erste Seriennummer und die zweite Seriennummer in Beziehung zueinanderstehen, wobei die Beziehung einen gemeinsamen Kunden repräsentiert oder eine teilweise Übereinstimmung ist.

9. Sensoreinrichtung (100) nach einem der Ansprüche 2 bis 8, wobei der erste Sensor weiterhin eingerichtet ist, Parametrierinformationen aus einem Backup bereitzustellen.

10. Sensoreinrichtung (100) nach einem der Ansprüche 2 bis 9, wobei der erste Sensor und der zweite Sensor Füllstandsensoren sind.

11. Sensoreinrichtung (100) nach einem der Ansprüche 2 bis 10, wobei der zweite Sensor eingerichtet ist, den ersten Sensor nach Übertragung der Sensorparametrierung und der Übernahme der Sensorparametrierung zu ersetzen.

12. Verwendung eines Sensors (110, 120) nach Anspruch 1 zur Füllstandmessung, Durchflussmessung, Grenzstandmessung, Druckmessung, Dichtemessung oder Objekterfassung.

13. Verfahren (200) zur Übertragung einer Sensorparametrierung zwischen einem ersten Sensor und einem zweiten Sensor über eine Kommunikationsverbindung (103, 104), wobei der erste Sensor (110) eine Sensorparametrierung aufweist, die eine Parametrierung des ersten Sensors ist, aufweisend die Schritte:
Bereitstellen (201) von Energie, die für die Kommunikationsverbindung (103, 104) notwendig ist, über die Kommunikationsverbindung (103, 104) durch den zweiten Sensor (120) an den ersten Sensor (110);
Senden (202) der Sensorparametrierung des ersten Sensors durch den ersten Sensor (110) an den zweiten Sensor (120);
Empfangen und Übernehmen (203) der Sensorparametrierung durch den zweiten Sensor (120);
Ersetzen des ersten Sensors durch den zweiten Sensor.

14. Verfahren nach Anspruch 13, wobei nach der Übernahme der Sensorparametrierung eine Messwertübertragung im ersten Sensor (110) deaktiviert wird (204).

15. Programmelement, das,
wenn es auf einer Steuereinheit (112, 122) eines ersten Sensors (110) ausgeführt wird, den Sensor (110) anleitet, den Schritt des Verfahrens nach Anspruch 13,
Senden (202) der Sensorparametrierung des ersten Sensors durch den ersten Sensor (110) an den zweiten Sensor (120), durchführt;
und wenn es auf einer Steuereinheit (112, 122) eines zweiten Sensors (120), der die für eine Kommunikationsverbindung (103, 104) zwischen dem ersten und dem zweiten Sensor notwendige Energie bereitstellt, ausgeführt wird, den Schritt des Verfahrens nach Anspruch 13,
Empfangen und Übernehmen (203) der Sensorparametrierung durch den zweiten Sensor (120), durchzuführen; und anschließend den Schritt des Verfahrens nach Anspruch 14,
Deaktivieren der Messwertübertragung im ersten Sensor (110) durchzuführen.

## Claims

1. Sensor (120) for a sensor device (100) having a first (110) and a second (120) sensor, in which the sensor is the second sensor (120); wherein
the second sensor (120) is arranged to receive the sensor parameterisation of the first sensor (110) with which the first sensor (110) is configured and to adopt this sensor parameterisation to replace the first sensor (110); and wherein
the second sensor (120) is further arranged to provide the first sensor (110) with the energy required to transmit the sensor parameterisation via the communication link (103, 104) via the communication link (103, 104).

2. A sensor device (100) for transmitting a sensor parameterisation between sensors, comprising
a first sensor (110) having a sensor parameterisation which is a parameterisation of the first sensor; and
a second sensor (120) according to claim 1;
wherein
the first sensor (110) and the second sensor (120) are arranged to communicate with each other via a communication link (103, 104);
the first sensor (110) is arranged to send its sensor parameterisation to the second sensor (120) via the communication link (103, 104);
the second sensor (120) is arranged to receive and adopt the sensor parameterisation of the first sensor to replace the first sensor; and wherein
the second sensor (120) is further arranged to provide the first sensor (110) with the energy required for transmitting the sensor parameterisation via the communication link (103, 104) via the communication link (103, 104).

3. The sensor device (100) according to claim 2, wherein the communication link (103, 104) is a near field communication (NFC) link or is a wired link.

4. The sensor device (100) according to any one of claims 2 to 3, wherein the first sensor and the second sensor are configured to be able to act both as a master and as a slave.

5. The sensor device (100) according to any one of claims 2 to 3, wherein the second sensor is arranged to receive a signal to start the transmission.

6. The sensor device (100) according to claim 5, wherein the signal to start the transmission is generated by a button, a reed contact, a Hall sensor, a Bluetooth device and/or a mobile radio device.

7. The sensor device (100) according to any one of claims 2 to 6, wherein the sensor parameterisation comprises information on the measurement physics, cloud access data, data for assigning the first sensor to a measuring point and/or coupling information for operating devices.

8. The sensor device (100) according to any one of claims 2 to 7, wherein
the first sensor comprises a first serial number and the second sensor comprises a second serial number; and wherein the first sensor is arranged to transmit the data via the communication link only when the first serial number and the second serial number are related to each other, wherein the relationship represents a common customer or is a partial match.

9. The sensor device (100) according to any one of claims 2 to 8, wherein the first sensor is furthermore configured to provide parameterisation information from a backup.

10. The sensor device (100) according to any one of claims 2 to 9, wherein the first sensor and the second sensor are level sensors.

11. The sensor device (100) according to any one of claims 2 to 10, wherein the second sensor is configured to replace the first sensor after transmission of the sensor parameterisation and acceptance of the sensor parameterisation.

12. Use of a sensor (110, 120) according to claim 1 for level measurement, flow measurement, point level measurement, pressure measurement, density measurement or object detection.

13. A method (200) of transmitting a sensor parameterisation between a first sensor and a second sensor via a communication link (103, 104), the first sensor (110) having a sensor parameterisation which is a parameterisation of the first sensor, comprising the steps of providing (201) energy, which is necessary for the communication link (103, 104), to the first sensor (110) via the communication link (103, 104) by the second sensor (120);
sending (202) the sensor parameterisation of the first sensor by the first sensor (110) to the second sensor (120);
receiving and accepting (203) the sensor parameterisation by the second sensor (120);
replacing the first sensor with the second sensor.

14. The method according to claim 13, wherein a measured value transmission in the first sensor (110) is deactivated (204) after the sensor parameterisation has been accepted.

15. A program element which,
when executed on a control unit (112, 122) of a first sensor (110), directs the sensor (110) to perform the step of the method according to claim 13,
sending (202) the sensor parameterisation of the first sensor by the first sensor (110) to the second sensor (120);
and when executed on a control unit (112, 122) of a second sensor (120) that provides the power necessary for a communication link (103, 104) between the first and second sensors, the step of the method according to claim 13,
receiving and accepting (203) the sensor parameterisation by the second sensor (120); and subsequently performing the step of the method according to claim 14,
deactivating the measured value transmission in the first sensor (110).

## Revendications

1. Capteur (120) pour un dispositif capteur (100) présentant un premier capteur (110) et un deuxième capteur (120), dans lequel le capteur est le deuxième capteur (120) ; dans lequel
le deuxième capteur (120) est conçu pour recevoir le paramétrage du premier capteur (110), avec lequel le premier capteur (110) est configuré, et pour reprendre ce paramétrage de capteur afin de remplacer le premier capteur (110) ; et
le deuxième capteur (120) est en outre conçu pour fournir au premier capteur (110), via la liaison de communication (103, 104), l'énergie nécessaire à la transmission du paramétrage de capteur via la liaison de communication (103, 104).

2. Dispositif capteur (100) pour transmettre un paramétrage de capteur entre des capteurs, présentant :
un premier capteur (110) qui présente un paramétrage de capteur qui est un paramétrage du premier capteur ; et
un deuxième capteur (120) selon la revendication 1 ;
dans lequel
le premier capteur (110) et le deuxième capteur (120) sont conçus pour communiquer entre eux via une liaison de communication (103, 104) ;
le premier capteur (110) est conçu pour envoyer son paramétrage de capteur au deuxième capteur (120) via la liaison de communication (103, 104) ;
le deuxième capteur (120) est conçu pour recevoir et reprendre le paramétrage de capteur du premier capteur afin de remplacer le premier capteur ; et dans lequel le deuxième capteur (120) est en outre conçu pour fournir au premier capteur (110), via la liaison de communication (103, 104), l'énergie nécessaire à la transmission du paramétrage de capteur via la liaison de communication (103, 104).

3. Dispositif capteur (100) selon la revendication 2, dans lequel la liaison de communication (103, 104) est une liaison de communication en champ proche (Near Field Communication, NFC) ou une liaison filaire.

4. Dispositif capteur (100) selon l'une des revendications 2 à 3, dans lequel le premier capteur et le deuxième capteur sont configurés pour pouvoir fonctionner aussi bien en tant que maître qu'en tant qu'esclave.

5. Dispositif capteur (100) selon l'une des revendications 2 à 4, dans lequel le deuxième capteur est conçu pour recevoir un signal afin de démarrer la transmission.

6. Dispositif capteur (100) selon la revendication 5, dans lequel le signal pour démarrer la transmission est généré par une touche, un contact Reed, un capteur à effet Hall, un appareil Bluetooth et/ou un appareil de téléphonie mobile.

7. Dispositif capteur (100) selon l'une des revendications 2 à 6, dans lequel le paramétrage de capteur présente des informations sur la physique de mesure, des données d'accès au cloud, des données concernant l'affectation du premier capteur à un point de mesure et/ou des informations de couplage pour des équipements de commande.

8. Dispositif capteur (100) selon l'une des revendications 2 à 7, dans lequel le premier capteur présente un premier numéro de série et le deuxième capteur présente un deuxième numéro de série ; et dans lequel le premier capteur est conçu pour envoyer les données via la liaison de communication uniquement lorsque le premier numéro de série et le deuxième numéro de série sont en relation l'un avec l'autre, la relation représentant un client commun ou une correspondance partielle.

9. Dispositif capteur (100) selon l'une des revendications 2 à 8, dans lequel le premier capteur est en outre conçu pour fournir des informations de paramétrage à partir d'une sauvegarde.

10. Dispositif capteur (100) selon l'une des revendications 2 à 9, dans lequel le premier capteur et le deuxième capteur sont des capteurs de niveau de remplissage.

11. Dispositif capteur (100) selon l'une des revendications 2 à 10, dans lequel le deuxième capteur est conçu pour remplacer le premier capteur après la transmission du paramétrage de capteur et la reprise du paramétrage de capteur.

12. Utilisation d'un capteur (110, 120) selon la revendication 1 pour mesurer un niveau de remplissage, mesurer un débit, mesurer un niveau limite, mesurer une pression, mesurer une densité ou détecter des objets.

13. Procédé (200) pour transmettre un paramétrage de capteur entre un premier capteur et un deuxième capteur via une liaison de communication (103, 104), dans lequel le premier capteur (110) présente un paramétrage de capteur qui est un paramétrage du premier capteur, comportant les étapes de :
fournir (201) l'énergie nécessaire à la liaison de communication (103, 104) via la liaison de communication (103, 104) par le deuxième capteur (120) au premier capteur (110) ;
envoyer (202) le paramétrage de capteur du premier capteur par le premier capteur (110) au deuxième capteur (120) ;
recevoir et reprendre (203) le paramétrage de capteur par le deuxième capteur (120) ;
remplacer le premier capteur par le deuxième capteur.

14. Procédé selon la revendication 13, dans lequel, après la reprise du paramétrage de capteur, une transmission de valeurs de mesure dans le premier capteur (110) est désactivée (204).

15. Élément de programme qui,
lorsqu'il est exécuté sur une unité de commande (112, 122) d'un premier capteur (110), instruit le capteur (110) à mettre en œuvre l'étape du procédé selon la revendication 13 consistant à :
envoyer (202) le paramétrage de capteur du premier capteur par le premier capteur (110) au deuxième capteur (120) ;
et, lorsqu'il est exécuté sur une unité de commande (112, 122) d'un deuxième capteur (120) qui fournit l'énergie nécessaire à une liaison de communication (103, 104) entre le premier et le deuxième capteur, à mettre en œuvre l'étape du procédé selon la revendication 13 consistant à :
recevoir et reprendre (203) le paramétrage de capteur par le deuxième capteur (120) ; et ensuite à mettre en œuvre l'étape du procédé selon la revendication 14 consistant à :
désactiver la transmission de valeurs de mesure dans le premier capteur (110).
